(19) **Europäisches Patentamt**
**European Patent Office**
**Office européen des brevets**

(11) Veröffentlichungsnummer : **0 336 397 B1**

(12) # EUROPÄISCHE PATENTSCHRIFT

(45) Veröffentlichungstag der Patentschrift :
**22.07.92 Patentblatt 92/30**

(51) Int. Cl.⁵ : **G01F 15/18**

(21) Anmeldenummer : **89105985.9**

(22) Anmeldetag : **05.04.89**

(54) **Wasserzähler-Anschlusselement.**

(30) Priorität : **06.04.88 DE 8804546 U**

(43) Veröffentlichungstag der Anmeldung :
**11.10.89 Patentblatt 89/41**

(45) Bekanntmachung des Hinweises auf die
Patenterteilung :
**22.07.92 Patentblatt 92/30**

(84) Benannte Vertragsstaaten :
**AT BE CH DE ES FR GB GR IT LI LU NL SE**

(56) Entgegenhaltungen :
**DE-A- 2 043 256**
**DE-C- 120 747**

(73) Patentinhaber : **HAMBURGER WASSERWERKE GMBH**
**Billhorner Deich 2**
**W-2000 Hamburg 26 (DE)**

(72) Erfinder : **Flege, Uwe**
**Bergheide 17a**
**W-2104 Hamburg 92 (DE)**

(74) Vertreter : **Lieck, Hans-Peter, Dipl.-Ing.**
**Feddersen Laule Scherzberg Undritz**
**Widenmayerstrasse 36**
**W-8000 München 22 (DE)**

## Beschreibung

Die Erfindung bezieht sich auf ein Wasserzähler-Anschlußelement zum Einbau in ein Gehäuse eines Rundstromventils.

Ein ähnliches Auschlußelement ist aus DE-A-2043256 bekannt, das einen mit dem Gehäuse verschraubbaren Rohrbereich umfaßt, in welchem ein Zulauf - und ein Ablaufrohr für den Wasserzähler vorgesehen sind.

Aus dem Stand der Technik ist es ferner bekannt, einen Wasserzähler im Zulaufbereich der Trinkwasserinstallation eines Gebäudes zu installieren, um den Gesamtwasserverbrauch ermitteln zu können. Insbesondere bei Häusern mit einer größeren Anzahl von Wohneinheiten oder Büroeinheiten ist es bei dieser Ausgestaltung der Installation jedoch nicht möglich, den Wasserverbrauch der einzelnen wohn- oder Büroeinheit zu ermitteln. Es wurde deshalb vorgeschlagen, das jeweilige Absperrventil mittels dessen die Trinkwasserzufuhr zu der jeweiligen Wohn- oder Büroeinheit unterbrochen werden kann, zur Installation eines Wasserzählers zu benutzen. Dabei wird das Absperrorgan des Absperrventils entnommen und stattdessen ein Anschlußelement eingesetzt, welches mit einem Wasserzähler verbunden ist. Der Vorteil dieser Vorgehensweise liegt darin, daß der Wasserzähler ohne Umbauten an der Trinkwasseranlage, insbesondere ohne ein Freilegen und Trennen der Trinkwasserleitungen installiert werden kann. Es ist somit möglich, schnell und mit geringem Kostenaufwand nachträglich einen Wasserzähler zu installieren.

Da das Rundstrom-Absperrventil nach Entnahme des Absperrorganes einen freien Rohrquerschnitt aufweist, durch welchen das Wasser von der Einlaufseite zu der Auslaufseite strömen kann, ist es notwendig eine Unterteilung so vorzunehmen, daß das zulaufende Trinkwasser durch den Oberteil-Gewindestutzen des Armaturengehäuses umgeleitet, einem Wasserzähler zugeführt, durch den Gewindestutzen zurückgeleitet und in die Wasserversorgung eingespeist wird. Bei dem bekannten Wasserzähler-Anschlußelement erfolgt die Umlenkung mittels eines Steigrohres und eines Spezialkolbens. Dabei wird der Spezialkolben in das Armaturengehäuse des Absperrventils so eingesetzt, daß der Wasserzähler über den Spezialkolben anschließbar ist. Das zuströmende Trinkwasser strömt somit durch den Spezialkolben zu dem Wasserzähler und wird anschließend durch einen relativ schmalen Spalt, welcher in der Regel eine Spaltbreite von nur 1,5 mm aufweist, am Außenumfang des Spezialkolbens zwischen diesem und dem Steigrohr zurückgeleitet, so daß es zu der Trinkwasserentnahmestelle strömen kann.

Die Verwendung des Spezialkolbens und des Steigrohrs bringt den Nachteil mit sich, daß, bedingt durch den sehr schmalen Spalt zwischen dem Steigrohr und dem Spezialkolben, erhebliche Druckverluste auftreten. Bei einem mittleren Versorgungsdruck von 5,0 bar führt dies zu Druckverlusten von ca. 2,5 bar. Da weiterhin der Druckverlust des Wasserzählers selbst bei Nennbelastung 0,25 bar und bei maximaler Belastung 1,0 bar beträgt, summiert sich der gesamte, durch den Einbau des Anschlußelements und des Wasserzählers auftretende Druckverlust auf Werte zwischen 2,75 bar und 3,50 bar. Dies wiederum hat zur Folge, daß in der nachfolgenden Trinkwasserleitung ein Druck vorliegt, welcher so gering ist, daß viele Installationen, beispielsweise hydraulisch gesteuerte Trinkwassererwärmer oder Druckspüler nicht mehr oder nur noch bedingt funktionsfähig sind. Eine Abhilfe dieses Problems ist nur durch eine erhebliche Erhöhung der Versorgungsdrücke möglich, welche jedoch vielfach aus rein technischen Gründen ausscheidet, da der mittlere Versorgungsdruck im allgemeinen 4,0 bis 5,0 bar beträgt.

Ein weiterer, wesentlicher Nachteil der bekannten Anordnung besteht darin, daß der Spezialkolben beim Einbau in falsche Fließrichtung eingesetzt werden kann. Dies führt dazu, daß das Wasser den Wasserzähler in umgekehrte Richtung durchströmt, so daß der Wasserzähler nicht funktionsfähig ist und rückwärts zählt. Dieser Fehler ist jedoch erst dann zu bemerken, wenn die Installation beendet und der Zähler in Betrieb genommen wurde. Zur Behebung dieser Fehlinstallation und zum korrekten Einsetzen des Spezialkolbens ist es dann erforderlich, den Wasserzähler vollständig zu demontieren und dabei insbesondere die gesamte Trinkwasserhausanlage abzusperren.

Weiterhin erweist es sich bei der bekannten Konstruktion als nachteilig, daß der Spezialkolben mittels sehr komplizierter Arbeitsgänge eingebaut werden muß. Der Kolben kann nämlich nicht in gerade Richtung, sondern nur schräg in das Gehäuse des Absperrventils eingesetzt werden und muß nachfolgend ausgerichtet werden. Dabei besteht insbesondere die Gefahr, daß die Dichtung des Spezialkolbens verschoben oder beschädigt wird, so daß eine gewisse Wassermenge unter Umgehung des Wasserzählers direkt zu der Entnahmestelle strömen kann.

Ein weiterer, erheblicher Nachteil dieser bekannten Anordnung besteht darin, daß der Wasserzähler direkt an das Gehäuse des Absperrventils angesetzt werden muß. Es ist nicht möglich, diesen räumlich von dem Absperrventil getrennt zu installieren. Die bekannte Einbauweise ist deshalb nur dort praktikabel, wo das Absperrventil gut zugänglich angeordnet ist. Da dies insbesondere in Wohneinheiten, in welchen das Absperrventil in der Küche oder im Bad vorgesehen ist, vielfach nicht möglich ist, scheidet die nachträgliche Installation eines Wasserzählers in diesen Fällen aus.

Ein zusätzlicher Nachteil der bekannten Einrichtung besteht darin, daß der Wasserzähler, insbesondere dessen Anschlußelemente speziell an den Einbau mittels des Steigrohrs und des Spezialkolbens angepaßt sein müssen, so daß die Installation von Wasserzählers anderer Fabrikate oder Bauarten nicht möglich ist.

Der Erfindung liegt die Aufgabe zugrunde, ein Wasserzähler-Anschlußelement zu schaffen, welches bei einfachem Aufbau und betriebssicherer Wirkungsweise in das Gehäuse eines Rundstromventils einsetzbar ist und den Anschluß beliebiger Wasserzähler ermöglicht.

Erfindungsgemäß wird die Aufgabe dadurch gelöst, daß das Anschlußelement einen mit dem Gehäuse verschraubbaren Rohrbereich umfaßt, mit welchem ein Zulaufrohr und Ablaufrohr für den Wasserzähler verbunden sind und daß in das Anschlußelement ein Trennkeil einsetzbar ist, welcher mit einer Randdichtung versehen ist und dichtend mittig in den Rohrbereich und das Gehäuse des Rundstromventils einsetzbar ist.

Das erfindungsgemäße Wasserzähler-Anschlußelement zeichnet sich durch eine Reihe erheblicher Vorteile aus. Da das Anschlußelement einen Rohrbereich umfaßt, von welchem ein Zulaufrohr und ein Ablaufrohr für den Wasserzähler abzweigen, ist es möglich, an dem Zulaufrohr und dem Ablaufrohr in beliebiger Weise einen Wasserzähler zu installieren, beispielsweise unter Zuhilfenahme weiterer Rohrelemente, druckfester Schläuche oder ähnlichem. Es ist erfindungsgemäß nicht erforderlich, daß der Wasserzähler direkt an das Anschlußelement angeschlossen oder mit diesem einstückig ausgebildet ist. Erfindungsgemäß ist es somit möglich, sowohl verschiedene Bauarten und Fabrikate von Wasserzählern zu verwenden, als auch diese räumlich getrennt von dem Anschlußelement zu installieren, beispielsweise in anderen Räumen oder an Stellen, an denen der Wasserzähler bequem ablesbar ist.

Ein weiterer, wesentlicher Vorteil der Erfindung besteht darin, daß eine Unterteilung zwischen dem Zulauf- und Ablaufbereich des Ventilgehäuses mittels eines Trennkeils erfolgt, so daß die verbleibenden freien Querschnittsflächen jeweils im wesentlichen halbkreisförmig sind, so daß nur ein sehr geringer Druckverlust durch das Anschlußelement hervorgerufen wird. Bei Verwendung des erfindungsgemäßen Anschlußelements besteht somit nicht die Gefahr, daß der Druck des Trinkwassers in der stromabseitigen Rohrleitung der Trinkwasseranlage unter einen Wert abfällt, welcher die Verwendung druckabhängiger Verbraucher, beispielsweise Druckspülungen verbietet.

Weiterhin ist es erfindungsgemäß besonders günstig, daß Fehlinstallationen des Anschlußelementes nicht auftreten können, da der Trennkeil eine mittige Unterteilung des Gehäuses des Absperrelementes bewirkt und daß sowohl das Zulaufrohr als auch das Ablaufrohr zum Anschluß des Wasserzählers frei zugänglich und einsehbar sind. Bei Kenntnis der Durchströmungsrichtung durch das Gehäuse des Absperrventils ist es somit auf besonders einfache Weise möglich, das Zulaufrohr bzw. das Ablaufrohr zu bestimmen und den Wasserzähler in richtiger Weise zu installieren. Sollten trotzdem Fehlinstallationen vorgenommen worden sein, so bereitet es keine Schwierigkeiten, nachträglich den Wasserzähler ohne Demontage des Anschlußelementes richtig anzuschließen.

Der erfindungsgemäße Trennkeil ist mit einer Randdichtung versehen und wird in einfacher Weise in das Gehäuse des Absperrventils eingesetzt. Dabei besteht nicht die Gefahr, daß die Dichtung durch Verschiebungen oder Verkippungen des Trennkeils beschädigt werden kann. Der Trennkeil wird vielmehr lediglich eingedrückt und stellt damit eine ausreichende Dichtung sicher. Fehlinstallationen können somit in wirkungsvoller Weise vermieden werden.

In Abhängigkeit von der Größe, d.h. dem Nenndurchmesser des Absperrventils kann das erfindungsgemäße Anschlußelement bei Rohrleitungen unterschiedlichster Nennweite und bei verschiedensten Bauarten von Absperrventilen verwendet werden. Es ist lediglich erforderlich, den verschraubbaren Rohrbereich des Anschlußelements in geeigneter Weise zu dimensionieren und den Trennkeil an die Größe des Absperrelements anzupassen. Weiterhin ist es auf besonders einfache Weise möglich, verschiedenste Fabrikate und Klassen von Wasserzählern in beliebigen Anordnungen anzuschließen.

In einer besonders günstigen Ausgestaltung der Erfindung ist vorgesehen, daß der Trennkeil plattenförmig ausgebildet und in einer Nut des Anschlußelements geführt ist. Durch die plattenförmige Ausbildung des Trennkeils wird der nutzbare Rohrquerschnitt nur in minimaler Weise verringert, so daß die auftretenden Druckverluste auf ein Mindestmaß reduziert werden können. Die Führung des Trennkeils in einer Nut des Anschlußelements stellt sicher, daß der Trennkeil beim Einbau des Anschlußelements in richtiger Weise eingesetzt wird.

Eine Vorspannung des Trennkeils zu dessen dichtendem Sitz in dem Gehäuse des Absperrventils erfolgt bevorzugterweise mittels einer Druckschraube, welche am Anschlußelement gelagert ist. Um dabei eine Beschädigung des Trennkeils und/oder seiner Dichtungen durch ein zu starkes Vorspannen zu vermeiden, ist die Druckschraube mit einer Sollbruchstelle versehen. Die Bedienungsperson kann somit die Druckschraube anziehen, bis diese bricht und weiß dann ohne zusätzliche Prüfvorgänge, daß der Trennkeil sich in der korrekten Dichtposition befindet.

In einer günstigen Ausgestaltung des erfindungsgemäßen Anschlußelements sind das Zulaufrohr und das

3

Ablaufrohr in einem spitzen Winkel zueinander angeordnet, wobei zwischen den beiden Rohren ein Verbindungssteg vorgesehen ist, in welchem die Druckschraube in einer Gewindeausnehmung gelagert ist und in welchem die Nut zur Halterung des Trennkeils ausgebildet ist. Das Anschlußelement kann somit hinsichtlich seiner äußeren Abmessungen weitgehend minimiert werden, so daß ein Einbau auch bei beengten Platzverhältnissen möglich ist.

Als zusätzliche Dichtungsmaßnahme kann die Druckschraube selbst auch mit einer Dichtung versehen sein, so daß ein Austreten von Wasser auch bei einer Beschädigung des Trennkeils oder dessen Dichtung verhindert wird.

In einer weiteren, besonders günstigen Ausgestaltung der Erfindung ist vorgesehen, daß die Druckschraube im Kopfbereich ein Innengewinde aufweist, in welches eine Halteschraube zum Haltern einer Abdeck-Rosette einschraubbar ist.

Besonders günstig ist es, wenn im Bereich des Zulaufrohrs ein zusätzliches Absperrelement angeordnet ist, welches den Wasserzulauf zu dem Wasserzähler und somit die Wasserversorgung der jeweiligen Wohn- oder Büroeinheit unterbindet. Bei geschlossenem Absperrelement ist es somit möglich, den Wasserzähler auszuwechseln und/oder andere Arbeiten an dem nachgeordneten Installationsbereich vorzunehmen.

Um den Trennkeil mit einer möglichst hohen Festigkeit zu versehen, ist dieser bevorzugterweise aus Metall gefertigt, wobei die Randdichtung aus einem elastischen Materil besteht und auf den Trennkeil aufvulkanisiert ist.

Da erfindungsgemäß das Anschlußelement mit dem Gehäuse des Rundstromventils oder Absperrventils verschraubt wird, bevor der Trennkeil in seine endgültige Dichtungsposition verschoben wird, würde eine nachträgliche Verdrehung des Anschlußelementes möglicherweise zu einer Beschädigung des Trennkeils führen. Aus diesem Grunde ist es günstig, wenn am Anschlußelement ein Arretierelement befestigbar ist, welches mit der Wand des Gebäudes verbindbar ist. Das Arretierelement kann beispielsweise in einer Nut des Anschlußelements eingesetzt sein und wird in günstiger Weise von der Rosette abgedeckt, so daß es im installierten Zustand nicht sichtbar ist.

Die Vorteile des erfindungsgemäßen Anschlußelements bestehen somit darin, daß die beiden halbkreisförmigen Strömungsquerschnitte im Rohrbereich des Anschlußelements bzw. im Ausströmbereich des Rundstromventils lediglich eine minimale Druckverminderung bewirken. Weiterhin ist eine Fehlinstallation des Anschlußelements ausgeschlossen. Das erfindungsgemäße Anschlußelement kann in einfacher Weise, schnell und unkompliziert installiert werden, ohne daß Beschädigungen der Dichtung des Trennkeiles auftreten können. Weiterhin stellt der Trennkeil eine sichere Unterteilung zwischen dem Zuströmbereich und dem Abströmbereich des Rundstromventils sicher. Das erfindungsgemäße An schlußelement ist in einfacher Weise aus Metall (Messing, Rotguß oder Edelstahl) herstellbar. Auch die Herstellung des Trennkeils erfordert keinen hohen Aufwand. Das Anschlußelement ist somit insgesamt auf einfache und kostengünstige Weise herstellbar. Weiterhin kann das erfindungsgemäße Anschlußelement durch leichte Modifikationen sowohl für Geradsitzventile als auch für Schrägsitzventile verwendet werden. Es ist dabei lediglich erforderlich, die Ausgestaltung des Rohrbereichs in entsprechender Weise anzupassen und den Trennkeil hinsichtlich seiner Abmessungen zu modifizieren.

Im folgenden wird die Erfindung anhand eines Ausführungsbeispiels in Verbindung mit der Zeichnung beschrieben. Dabei zeigt:

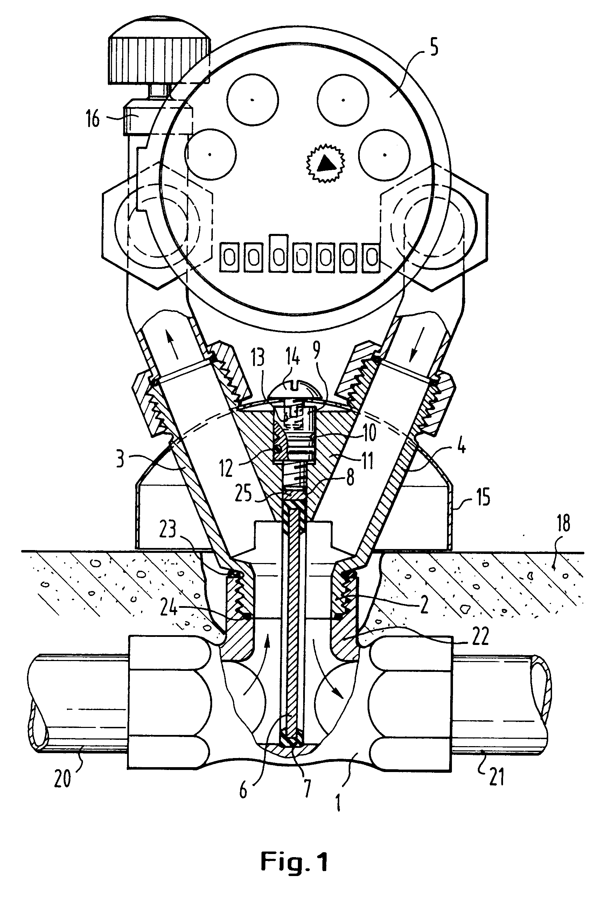

Fig. 1 eine schematische Darstellung, teils im Schnitt, des erfindungsgemäßen Anschlußelements im fertig montierten Zustand,

Fig. 2 eine Seitenansicht, teils im Schnitt, der in Fig. 1 gezeigten Anordnung,

Fig. 3 eine Seitenansicht des erfindungsgemäßen Trennkeils,

Fig. 4 eine Schnittansicht entlang der Linie IV - IV von Fig. 3,

Fig. 5 eine Schnittansicht entlang der Linie V - V von Fig. 3, und

Fig. 6 eine Schnittansicht entlang der Linie VI - VI von Fig. 2.

Die in den Figuren gezeigte Anordnung umfaßt ein Gehäuse 1 eines Rundstromventils, welches mit einem Zulaufrohr 20 und einem Ablaufrohr 21 verbunden ist. Aus dem Gehäuse 1 wurde das üblicherweise in einen Gewindestutzen 22 eingeschraubte Absperrelement entnommen.

Das erfindungsgemäße Anschlußelement umfaßt einen Rohrbereich 2, welcher in den Gewindestutzen 22 dichtend einschraubbar ist. Hierzu dienen Dichtungen 23, 24, welche beispielsweise in Form von O-Ringdichtungen ausgebildet sein können. Von dem Rohrbereich 2 zweigt ein Zulaufrohr 3 sowie ein Ablaufauf 4 ab, welche an ihren freien Enden jeweils mit einem Gewinde versehen sind und mit dem Zulauf bzw. Ablauf eines Wasserzählers 5 verbindbar sind. Zwischen dem Zulaufrohr 3 und dem Wasserzähler 5 ist bei der gezeigten Anordnung ein zusätzliches Absperrelement 16 vorgesehen, mit Hilfe dessen der Wasserzulauf zu dem Wasserzähler 5 unterbrochen werden kann.

Zur Unterteilung des Innenraums des Gehäuses 1 und des Rohrbereiches 2 ist ein plattenförmiger Trenn-

EP 0 336 397 B1

keil 6 vorgesehen, welcher mit einer im wesentlichen umlaufenden Randdichtung 7 versehen ist. Der Trennkeil ist in einer Nut 8 des Rohrbereiches 2 bzw. eines das Zulaufrohr und das Ablaufrohr 4 verbindenden Verbindungsstegs 11 angeordnet. In dem Verbindungssteg 11 ist weiterhin eine Druckschraube 9 gelagert, welche mittels einer Druckplatte 25 der dichtenden Anpressung des Trennkeils 6 dient. Um die durch die in dem Verbindungssteg 11 gelagerte Druckschraube 9 auf den Trennkeil 8 bzw. dessen Randdichtung 7 aufgebrachte Anpreßkraft zu begrenzen, weist die Druckschraube 9 eine Sollbruchstelle 10 auf. Weiterhin ist die Druckschraube mit einer Dichtung 12, beispielsweise in Form einer O-Ringdichtung versehen. Der Kopfbereich der Druckschraube 9 ist mit einem Innengewinde 13 versehen, in welches eine Halteschraube 14 einschraubbar ist, welche zur Halterung einer Rosette 15 dient, mittels derer das erfindungsgemäße Anschlußelement abdeckbar ist.

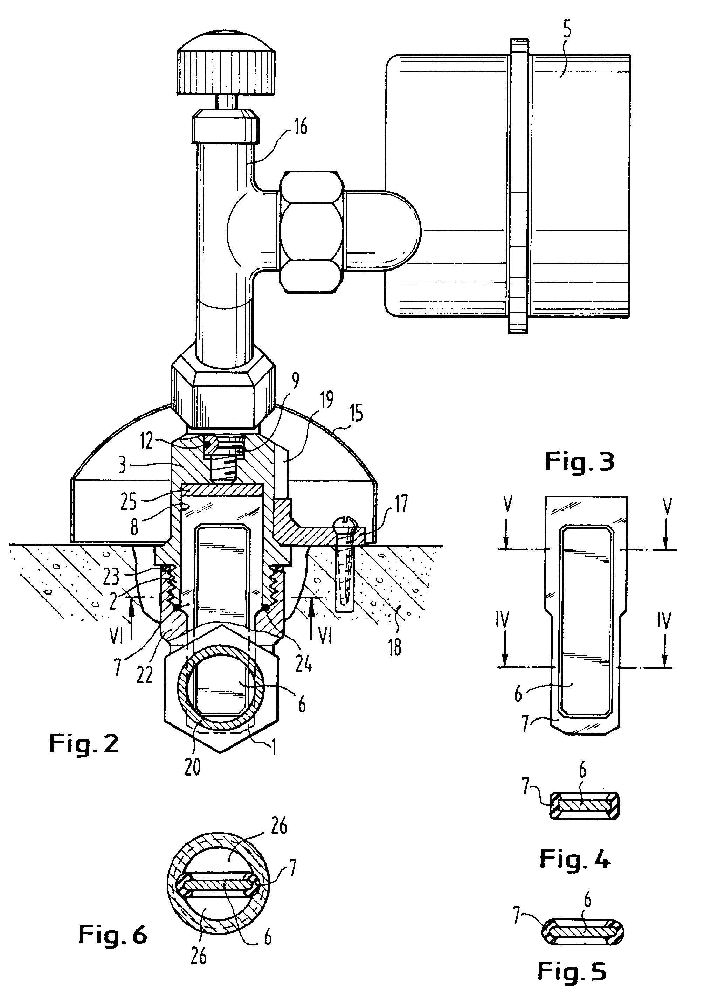

Wie insbesondere aus Fig. 2 ersichtlich ist, weist der Rohrbereich 2 eine Nut 19 auf, in welcher ein Arretierelement 17 verschiebbar gelagert ist, welches mit einer Wand 18 eines Gebäudes verschraubbar ist. Das Arretierelement 17 verhindert eine Verdrehung des Rohrbereichs 2, nachdem der Trennkeil 6 in seine dichtende Stellung vorgespannt wurde.

Fig. 3 stellt eine Seitenansicht des bei der Erfindung verwendeten Trennkeils dar. Die Fig. 4 und 5 zeigen jeweils Schnittansichten des Trennkeils. Aus den Darstellungen ist ersichtlich, daß der Trennkeil in seinen Abmessungen an den Durchmesser des Rohrbereichs 2 bzw. des Gewindestutzens 22 des Gehäuses 1 angepaßt und mit einer umlaufenden Dichtung versehen ist. Die Fig, 6 zeigt eine vereinfachte Schnittansicht durch den Gewindestutzen 22 des Gehäuses 1. Dabei ist insbesondere zu erkennen, daß die beiden Strömungsquerschnitte 26 jeweils im wesentlichen halbkreisförmig ausgebildet sind, so daß der Trennkeil 6 nur zu einer geringen Querschnittsverminderung führt.

Die Erfindung ist nicht auf die gezeigten Ausführungsbeispiele beschränkt. Für den Fachmann ergeben sich insbesondere im Hinblick auf die Anpassung an die unterschiedlichen Gehäuseformen des Rundstromventils vielfältige Abwandlungsmöglichkeiten.

## Patentansprüche

1. Wasserzähler-Anschlußelement zum Einbau in ein Gehäuse (1) eines Rundstromventils, wobei das Anschlußelement einen mit dem Gehäuse (1) verschraubbaren Rohrbereich (2) umfaßt, mit welchem ein Zulaufrohr (3) und ein Ablaufrohr (4) für den Wasserzähler (5) verbunden sind, und wobei ein in das Anschlußelement einsetzbarer Trennkeil (6) vorgesehen ist, welcher mit einer Randdichtung (7) versehen ist und dichtend mittig in den Rohrbereich (2) und das Gehäuse (1) des Rundstromventils einsetzbar ist.

2. Anschlußelement nach Anspruch 1, dadurch gekennzeichnet, daß der Trennkeil (6) plattenförmig ausgebildet und in einer Nut (8) des Anschlußelements geführt ist.

3. Anschlußelement nach Anspruch 1 oder 2, dadurch gekennzeichnet, daß der Trennkeil (6) mittels einer am Anschlußelement gelagerten Druckschraube (9) in seine Dichtstellung vorspannbar ist.

4. Anschlußelement nach Anspruch 3, dadurch gekennzeichnet, daß die Druckschraube (9) mit einer Sollbruchstelle (10) versehen ist.

5. Anschlußelement nach Anspruch 3 oder 4, dadurch gekennzeichnet, daß das Zulaufrohr (3) und das Ablaufrohr (4) in einem spitzen Winkel zueinander angeordnet sind und zwischen diesen ein Verbindungssteg (11) vorgesehen ist, in welchem die Druckschraube (9) in einer Gewindeausnehmung gelagert ist und in welchem die Nut (8) zur Halterung des Trennkeils (6) ausgebildet ist.

6. Anschlußelement nach einem der Ansprüche 3 bis 5, dadurch gekennzeichnet, daß die Druckschraube (9) mit einer Dichtung (12) versehen ist.

7. Anschlußelement nach einem der Ansprüche 3 bis 6, dadurch gekennzeichnet, daß die Druckschraube (9) im Kopfbereich ein Innengewinde (13) aufweist, in welches eine Halteschraube (14) zur Halterung einer Abdeck-Rosette (15) einschraubbar ist.

8. Anschlußelement nach einem der Ansprüche 1 bis 7, dadurch gekennzeichnet, daß im Bereich des Zulaufrohrs (3) ein Absperrelement (16) angeordnet ist.

9. Anschlußelement nach einem der Ansprüche 1 bis 8,

dadurch gekennzeichnet,
daß der Trennkeil (6) aus Metall gefertigt ist und die Randdichtung (7) aus einem elastischen Material besteht und auf den Trenkeil (6) aufvulkanisiert ist.

10. Anschlußelement nach einem der Ansprüche 1 bis 9,
dadurch gekennzeichnet,
daß am Anschlußelement ein Arretierelement (17) befestigbar ist, welches mit der Wand (18) eines Gebäudes verbindbar ist.

11. Anschlußelement nach Anspruch 10,
dadurch gekennzeichnet,
daß das Arretierelement (17) in eine Nut (19) des Anschlußelements einsetzbar ist.


## Claims

1. A water meter coupling member for installation in a housing (1) of a circular current valve, wherein the coupling member includes a pipe section (2) for screwable connection to the housing (1), an inlet pipe (3) and an outlet pipe (4) for the water meter (5) being connected to the threaded pipe section, and wherein a separating wedge (6) is provided which is insertable into the coupling member and furnished with a seal (7) along the edge and adapted to be placed sealingly into the center of the pipe section (2) and the housing (1) of the circular current valve.

2. The coupling member as claimed in claim 1,
characterized in that
the separating wedge (6) is of plate-like design and guided in a groove (8) of the coupling member.

3. The coupling member as claimed inclaim 1 or 2,
characterized in that
the separating wedge (6) is adapted to be biased into sealing position by means of a setscrew (9) supported on the coupling member.

4. The coupling member as claimed in claim 3,
characterized in that
the setscrew (9) is provided with a design rupture location (10).

5. The coupling member as claimed in claim 3 or 4,
characterized in that
the inlet pipe (3) and the outlet pipe (4) are disposed at an acute angle with respect to each other and that a connecting web (11) is provided between them in which the setscrew (9) is supported in a threaded recess and in which the groove (8) is formed for retaining the separating wedge (6).

6. The coupling member as claimed in any one of claims 3 to 5,
characterized in that
the setscrew (9) is provided with a seal (12).

7. The coupling member as claimed in any one of claims 3 to 6,
characterized in that
in its head portion the setscrew (9) has an internal thread (13) into which a check screw (14) can be threaded to hold a covering collar (15).

8. The coupling member as claimed in any one of claims 1 to 7,
characterized in that
a shut-off member (16) is arranged in the region of the inlet pipe (3).

9. The coupling member as claimed in any one of claims 1 to 8,
characterized in that
the separating wedge (6) is made of metal and the seal (7) along the edge consists of elastic material and is attached by vulcanizing to the separating wedge (6).

10. The coupling member as claimed in any one of claims 1 to 9,
characterized in that
a locking member (17) is adapted to be fastened to the coupling member and to be connected to the wall (18) of a building.

11. The coupling member as claimed in claim 10,
characterized in that
the locking member (17) is insertable in a groove (19) of the coupling member.

**Revendications**

1. Dispositif de raccordement pour compteurs d'eau susceptible d'être installé dans un boîtier (1) d'une soupape à écoulement circulaire, dans lequel le dispositif de raccordement comprend une zone tubulaire (2) vissable sur le bottier (1) par laquelle un tube d'admission (3) et un tube de décharge (4) destinés au compteur d'eau (5) sont reliés, et dans lequel est prévue une clavette de séparation (6) insérable dans le dispositif de raccordement, laquelle clavette est pourvue d'un bord étanche et peut être insérée de manière étanche en position centrale dans la zone tubulaire (2) et le boîtier (1) de la soupape à écoulement circulaire.

2. Dispositif de raccordement selon la revendication 1,
caractérisé en ce que
la clavette de séparation (6), en de forme de plaque, est guidée dans une rainure (8) du dispositif de raccordement.

3. Dispositif de raccordement selon la revendication 1 ou 2,
caractérisé en ce que
la clavette de séparation (6) peut être précontrainte dans sa position étanche par une vis de serrage (9) logée dans le dispositif de raccordement.

4. Dispositif de raccordement selon la revendication 3,
caractérisé en ce que
la vis de serrage (9) possède un point de rupture (10).

5. Dispositif de raccordement selon la revendication 3 ou 4,
caractérisé en ce que
le tube d'admission (3) et le tube de décharge (4) sont agencés selon un angle aigu l'un vis-à-vis de l'autre et il est prévu entre eux une barrette de jonction (11) dans laquelle est logée la vis de serrage (9) dans un évidement taraudé et dans laquelle est formée la rainure (8) pour soutenir la clavette de séparation (6).

6. Dispositif de raccordement selon l'une quelconque des revendications 3 à 5,
caractérisé en ce que
la vis de serrage (9) est dotée d'une garniture étanche (12).

7. Dispositif de raccordement selon l'une quelconque des revendications 3 à 6,
caractérisé en ce que
la vis de serrage (9) présente dans la zone de sa tête un filet interne (13) dans lequel peut se visser un élément de retenue (14) pour retenir une rosace de recouvrement (15).

8. Dispositif de raccordement selon l'une quelconque des revendications 1 à 7,
caractérisé en ce qu'
un élément d'arrêt (16) est agencé dans la zone du tube d'admission (3).

9. Dispositif de raccordement selon l'une quelconque des revendications 1 à 8,
caractérisé en ce que
la clavette de séparation (6) est en métal et la garniture étanche (7) de son bord formée d'une matière élastique vulcanisée sur la clavette de séparation (6).

10. Dispositif de raccordement selon l'une quelconque des revendications 1 à 9,
caractérisé en ce qu'
un élément d'arrêt (17) peut être fixé à l'élément de raccordement, lequel élément d'arrêt peut être raccordé au mur (18) d'un bâtiment.

11. Dispositif de raccordement selon la revendication 10,
caractérisé en ce que
l'élément d'arrêt (17) peut être inséré dans une rainure (19) de l'élément de raccordement.

EP 0 336 397 B1

**Fig. 1**

8

Fig. 2

Fig. 3

Fig. 4

Fig. 5

Fig. 6